# EUROPEAN PATENT APPLICATION

(11) **EP 4 510 302 A1**
(43) Date of publication of application: **19.02.2025**
(21) Application number: 23913938.9
(22) Date of filing: 03.01.2023
(51) Int. Cl.: H01M 10/61

(54) **THERMAL MANAGEMENT COMPONENT, BATTERY AND ELECTRIC DEVICE**

(71) Applicant: Contemporary Amperex Technology Co., Limited, Ningde, Fujian 352100 (CN)
(72) Inventor: WU, Linshan, Ningde, Fujian 352100 (CN); LI, Junrong, Ningde, Fujian 352100 (CN); LIN, Weilong, Ningde, Fujian 352100 (CN)
(74) Representative: Frick, Robert
(86) International application number: PCT/CN2023/070207
(87) International publication number: WO 2024/145778

(57) **Abstract**

Embodiments of this application provide a thermal management component, a battery, and an electric apparatus. The thermal management component (30) includes two heat exchange surfaces (301) opposite to each other in a first direction; and multiple separating plates (311) are provided between the two heat exchange surfaces (301), and the multiple separating plates (311) are spaced apart, so as to form a flow channel (302). The separating plate (311) is of a bent structure, such that the separating plate (311) is retractable and deformable in the first direction. The separating plates (311) of the thermal management component (30) in the above embodiments can absorb external compressive forces, reducing the probability of structural failure of the thermal management component (30).

## Description

### TECHNICAL FIELD

This application relates to the field of thermal management, particularly to a thermal management component, a battery, and an electric apparatus.

### BACKGROUND

With the rapid development of the automotive industry, the development of electric vehicles has become a consensus among governments and the automotive industry worldwide. Electric vehicles have advantages such as low noise, good driving stability, and zero emissions, which are significant for maintaining national energy security, reducing exhaust emissions, and ensuring sustainable social development. The battery, as the power source of the electric vehicle, is one of the most critical components of the electric vehicle. However, the battery of the electric vehicle generates a lot of heat during charge and discharge. If the heat is not dissipated in time, it may affect the service life of the battery and even cause the electric vehicle to catch fire.

In some cases, the battery usually uses a thermal management component for heat dissipation. During the long-term use of the battery, the battery cells may swell and deform, causing excessive stress on the battery and leading to structural failure of the thermal management component.

### TECHNICAL PROBLEM

The purpose of this application is to provide a thermal management component, a battery, and an electric apparatus to resolve the problem of structural failure of the thermal management component caused by excessive stress.

### TECHNICAL SOLUTIONS

Embodiments of this application provide a thermal management component. The thermal management component includes two heat exchange surfaces opposite to each other in a first direction, multiple separating plates are provided between the two heat exchange surfaces, and the multiple separating plates are spaced apart, so as to form a flow channel. The separating plate is of a bent structure, such that the separating plate is retractable and deformable in the first direction.

The thermal management component provided in the above embodiments includes multiple separating plates. Because the separating plate is of a bent structure and the separating plate is retractable and deformable in the first direction, the separating plate can absorb the external compressive force, reducing the probability of structural failure of the thermal management component under stress. When the thermal management component is applied to a battery, the separating plates can retract and deform in the first direction, reducing the pressure required for assembling the battery cells and the thermal management component in the box. This lowers the requirements for the assembly equipment or the box structure and reduces the pressure on the battery cells during assembly. Additionally, the thermal management component provides a swelling space for the long-term cycling of the battery cells and can accommodate different degrees of swelling of the battery cells, providing certain protection for both the battery cells and the thermal management component.

In some embodiments, the separating plate is of a bent structure in the shape of a bent line or snake in the first direction.

With the use of the above technical solution, the separating plates can deform elastically in the first direction, serving as a buffer to absorb energy.

In some embodiments, a cross section of the separating plate in the first direction is V-shaped, Z-shaped, S-shaped, or M-shaped.

With the use of the above technical solution, the separating plates can have various shapes to meet different compression requirements; and the separating plates of the above shapes can all retract and deform along the first direction and are easy to manufacture.

In some embodiments, a material of the separating plate is plastic or metal.

With the use of the above technical solution, the separating plates have good deformation capability and are easy to manufacture.

In some embodiments, the separating plate is a long strip-shaped member, and a length direction of the separating plate is a length direction or a width direction of the thermal management component.

With the use of the above technical solution, the extension direction of the separating plates can be flexibly arranged to meet different requirements.

In some embodiments, the thermal management component is provided with at least one fluid inlet, at least one fluid outlet, and at least one fluid collecting tube, the fluid inlet and the fluid outlet both communicate with the fluid collecting tube, and an extension direction of the fluid collecting tube and the length direction of the separating plate form a preset included angle.

With the use of the above technical solution, the thermal management component can deliver a heat exchange medium into the flow channel and export the heat exchange medium, achieving the circulation of the heat exchange medium and thus the heat exchange effect.

In some embodiments, the fluid inlet, the flow channel, and the fluid outlet communicate, enabling a heat exchange medium to flow unidirectionally in the flow channel.

With the use of the above technical solution, the fluid inlet, the flow channel, and the fluid outlet communicate form a one-way flow path, preventing the heat exchange medium from flowing back into the flow channel after heat exchange and affecting the thermal management effect.

In some embodiments, the thermal management component includes two such fluid collecting tubes, the fluid collecting tube is provided with at least one diverging port spaced apart along the extension direction thereof, one of the fluid collecting tubes communicates with the fluid inlet, the other of the fluid collecting tubes communicates with the fluid outlet, and the diverging port of each fluid collecting tube corresponds to the flow channel, enabling the heat exchange medium to flow unidirectionally in the flow channel.

With the use of the above technical solution, the fluid collecting tube serves the functions of collecting and distributing the flow, resulting in high heat exchange efficiency of the thermal management component.

In some embodiments, the thermal management component includes a plate support and two metal plates, the separating plate is disposed in the plate support, and along the first direction, the two metal plates are fixedly connected to two opposite sides of the plate support, respectively.

With the use of the above technical solution, the thermal management component includes a plate support and two metal plates, with the separating plates arranged in the plate support, facilitating molding. The metal plates have good thermal conductivity, helping to improve thermal management efficiency.

In some embodiments, the heat exchange surface is a surface of the metal plate, and two ends of the separating plate along the first direction respectively abut against the two metal plates.

With the use of the above technical solution, adjacent separating plates and the surface of the metal plate jointly form the flow channel, and the heat exchange medium in the flow channel can directly contact the metal plate, resulting in a better heat exchange effect and improved heat exchange efficiency.

In some embodiments, the plate support further includes an edge sealing frame wrapping a periphery of the multiple separating plates, and the fluid inlet, the fluid outlet, and the fluid collecting tube are all disposed on the edge sealing frame.

With the use of the above technical solution, because the multiple separating plates are dispersed, so as to form the flow channel, the edge sealing frame covers the periphery of the multiple separating plates, providing an edge sealing function, and preventing the heat exchange medium in the flow channel from spilling out.

In some embodiments, the edge sealing frame further includes two edge sealing portions opposite along the first direction, the edge sealing portion is in the shape of a rectangular looped frame, one pair of opposite side edges of the edge sealing portion cover two ends of each of the separating plates in the length direction, and the other pair of opposite side edges of the edge sealing portion are hermetically connected to corresponding side edges of the metal plate.

With the use of the above technical solution, the edge sealing portion only covers two pairs of two opposite ends of each separating plate, leaving the rest of the separating plate uncovered by the edge sealing portion, allowing the separating plates to directly abut against the metal plate, and enabling the heat exchange medium to contact the metal plate.

In some embodiments, the separating plate, the edge sealing portion, and the fluid collecting tube are integrally formed as one structure.

With the use of the above technical solution, the edge sealing frame is simple in structure, easy to mold, low in cost, and lightweight, helping to increase the production speed of the thermal management component.

In some embodiments, the thermal management component further includes a sealing gasket, the sealing gasket is fixed at an edge of the edge sealing frame, and the sealing gasket is disposed on at least one side of the edge sealing frame.

With the use of the above technical solution, the sealing gasket can enhance the sealing effect of the thermal management component.

In some embodiments, the metal plate and the plate support are integrally formed; or the metal plate is welded to the plate support.

With the use of the above technical solution, the metal plate is fixedly connected to the plate support, providing high structural strength.

In some embodiments, an edge of the metal plate is provided with a snap-fit portion, and the snap-fit portion is embedded in the plate support.

With the use of the above technical solution, the snap-fit portion of the metal plate is embedded in the plate support, further enhancing the connection strength between the metal plate and the plate support.

In some embodiments, a surface of the plate support protrudes from the surface of the metal plate, or the surface of the plate support is flush with the surface of the metal plate.

With the use of the above technical solution, the thermal management component can reduce the possibility of an adhesive overflowing onto an adjacent battery cell.

Embodiments of this application provide a battery, including:
a battery cell;
a thermal management component, the thermal management component being disposed on at least one side of the battery cell.

The above battery includes battery cells and a thermal management component, and the thermal management component can manage the thermal condition of the battery. For example, the thermal management component can lower the temperature of the battery cells to cool the battery cells or raise the temperature of the battery cells when the temperature of the battery cells is too low. The separating plates in the thermal management component can retract and deform in the thickness direction of the thermal management component, allowing the thermal management component to absorb a certain amount of compressive force, reducing the probability of structural failure due to stress, and improving the service life and reliability of the battery.

In some embodiments, the battery includes multiple rows of battery cells and multiple rows of thermal management components arranged alternately, and two opposite surfaces of the battery cell are respectively fitted against heat exchange surfaces of two adjacent thermal management components.

With the use of the above technical solution, the heat exchange surfaces of two adjacent thermal management components respectively exchange heat with two opposite surfaces of the battery cells, enabling effective thermal management of the battery cells of the above battery, and preventing thermal runaway of the battery cells.

Embodiments of this application provide an electric apparatus including the battery in the foregoing embodiments.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

A person of ordinary skill in the art can clearly understand various other advantages and benefits by reading the detailed description of the preferred embodiments below. The accompanying drawings are merely intended to illustrate the preferred embodiments and are not intended to limit this application. Throughout the drawings, the same reference numerals are used to denote the same components. In the accompanying drawings:
FIG. 1 is a schematic structural diagram of a vehicle according to an embodiment of this application;
FIG. 2 is a schematic structural diagram of a box according to an embodiment of this application;
FIG. 3 is a schematic three-dimensional diagram of a thermal management component and a battery cell according to an embodiment of this application;
FIG. 4 is a schematic exploded three-dimensional diagram of the thermal management component and the battery cell shown in FIG. 3;
FIG. 5 is a schematic three-dimensional diagram of a thermal management component according to an embodiment of this application;
FIG. 6 is a schematic exploded three-dimensional diagram of the thermal management component shown in FIG. 5;
FIG. 7 is a side view of the thermal management component shown in FIG. 5;
FIG. 8 is a cross-sectional view of the thermal management component along line A-A in FIG. 7;
FIG. 9 is a locally enlarged view of part B in the thermal management component shown in FIG. 8;
FIG. 10 is a schematic three-dimensional diagram of the thermal management component shown in FIG. 5 without a metal plate;
FIG. 11 is a locally enlarged view of part C in the thermal management component shown in FIG. 10;
FIG. 12 is a schematic three-dimensional diagram of a metal plate in the thermal management component shown in FIG. 6;
FIG. 13 is a schematic three-dimensional diagram of a thermal management component according to another embodiment of this application;
FIG. 14 is a side view of the thermal management component shown in FIG. 13;
FIG. 15 is a schematic exploded three-dimensional diagram of the thermal management component shown in FIG. 13;
FIG. 16 is a side view of the thermal management component shown in FIG. 13 without a metal plate;
FIG. 17 is a locally enlarged view of part D in the thermal management component shown in FIG. 16; and
FIG. 18 is a schematic three-dimensional diagram of a fluid collecting tube in the thermal management component shown in FIG. 15.

### Numeral references in the drawings:

1000. vehicle; 100. battery; 200. controller; 300. motor; 10. box; 11. first portion; 12. second portion; 20. battery cell; 30. thermal management component; 301. heat exchange surface; 302. flow channel; 303. fluid inlet; 304. fluid outlet; 31. plate support; 311. separating plate; 3111. bent portion; 312. edge sealing frame; 313. fluid collecting tube; 3131. diverging port; 314. edge sealing portion; 32. metal plate; 321. snap-fit portion; and 33. sealing gasket.

### DESCRIPTION OF EMBODIMENTS OF THE PRESENT INVENTION

The following describes in detail the embodiments of technical solutions of this application with reference to the accompanying drawings. The following embodiments are merely intended for a clearer description of the technical solutions of this application and therefore are merely used as examples which do not constitute any limitation on the protection scope of this application.

Unless otherwise defined, all technical and scientific terms used herein shall have the same meanings as commonly understood by persons skilled in the art to which this application pertains. The terms used herein are intended to merely describe the specific embodiments rather than to limit this application. The terms "include", "comprise", and any other variations thereof in the specification, claims and brief description of drawings of this application are intended to cover non-exclusive inclusions.

In the description of some embodiments of this application, the technical terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The applicant has found that in some cases, the battery usually uses a thermal management component for heat dissipation. During the long-term use of the battery, the battery cells may swell and deform, causing excessive stress on the battery and leading to structural failure of the thermal management component.

To resolve the problem of structural failure of the thermal management component, the applicant has found through research that a thermal management component can be designed, and the thermal management component includes two heat exchange surfaces opposite to each other in a first direction. Multiple separating plates are provided between the two heat exchange surfaces, and the multiple separating plates are spaced apart, so as to form a flow channel. The separating plate is designed as a bent structure, enabling the separating plate to be retractable and deformable in the first direction.

The thermal management component includes multiple separating plates. Because the separating plate is of a bent structure and the separating plate is retractable and deformable in the first direction, the separating plate can absorb the external compressive force, reducing the probability of structural failure of the thermal management component under stress. When the thermal management component is applied to a battery, the separating plates can retract and deform in the first direction, reducing the pressure required for assembling the battery cells and the thermal management component in the box. This lowers the requirements for the assembly equipment or the box structure and reduces the pressure on the battery cells during assembly. Additionally, the thermal management component provides a swelling space for the long-term cycling of the battery cells and can accommodate different degrees of swelling of the battery cells, providing certain protection for both the battery cells and the thermal management component.

The battery cell disclosed in the embodiments of this application can be used for electric apparatuses that use a battery as a power source or various energy storage systems that use a battery as an energy storage element. The electric apparatus may be but is not limited to a mobile phone, a tablet, a laptop computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

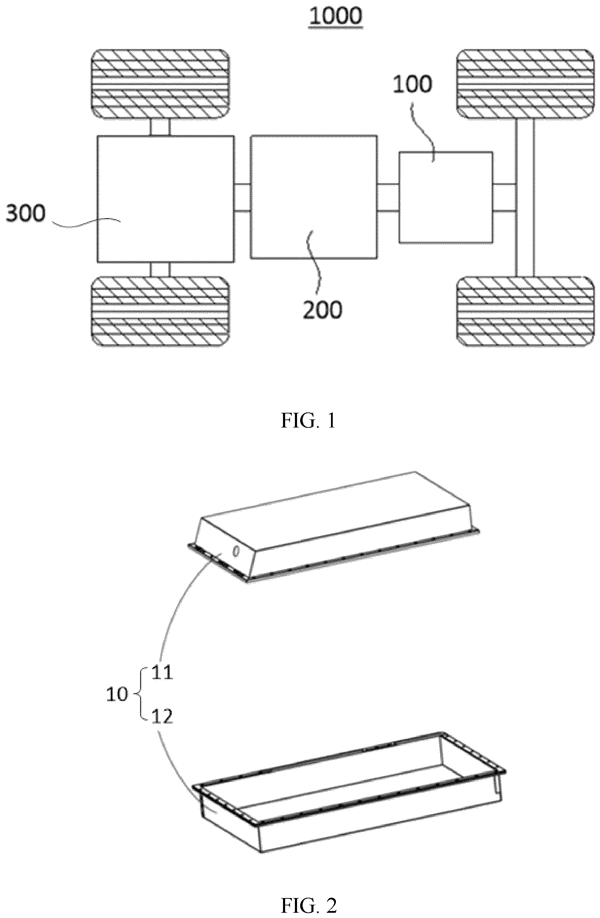

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power supply for the vehicle 1000 but also a driving power source for the vehicle 1000, replacing or partially replacing fossil fuel or natural gas to provide driving traction for the vehicle 1000.

In some embodiments, the battery 100 includes a box, a battery cell, and a thermal management component, with the battery cell and the thermal management component housed in the box.

Refer to FIG. 2, which is an exploded view of the box 10 provided in some embodiments of this application. The box 10 is configured to provide an accommodating space for the battery cell. The box 10 may be a variety of structures. In some embodiments, the box 10 may include a first portion 11 and a second portion 12. The first portion 11 and the second portion 12 fit together such that the first portion 11 and the second portion 12 jointly define a space for accommodating the battery cell. The second portion 12 may be a hollow structure with one end open, and the first portion 11 may be a plate structure, where the first portion 11 covers the open side of the second portion 12 so that the first portion 11 and the second portion 12 jointly enclose the accommodating space. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

Referring to FIGs. 1 to 4, in the battery 100, multiple battery cells 20 may be provided, and the multiple battery cells 20 may be connected in series, parallel, or series-parallel, where being connected in series-parallel means a combination of series and parallel connections of the multiple battery cells 20. The plurality of battery cells 20 may be directly connected in series, parallel, or series-parallel, and then an entirety of the multiple battery cells 20 is accommodated in the box 10. Certainly, the battery 100 may alternatively be formed in a manner that multiple battery cells 20 are connected in series, parallel, or series-parallel first to form a battery module and then multiple battery modules are connected in series, parallel, or series-parallel to form an entirety which is accommodated in the box 10. The battery 100 may further include other structures. For example, the battery 100 may further include a busbar configured to implement electrical connection between the multiple battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

The battery cell 20 includes an electrode assembly and an electrolyte. The electrode assembly includes a positive electrode plate and a negative electrode plate. The battery cell mainly relies on migration of metal ions between the positive electrode plate and the negative electrode plate to work. The positive electrode plate includes a positive electrode current collector and a positive electrode active substance layer. A surface of the positive electrode current collector is coated with the positive electrode active substance layer. A positive electrode current collector uncoated with the positive electrode active substance layer protrudes out of a positive electrode current collector coated with the positive electrode active substance layer, and the positive electrode current collector uncoated with the positive electrode active substance layer serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. A surface of the negative electrode current collector is coated with the negative electrode active substance layer. A negative electrode current collector uncoated with the negative electrode active substance layer protrudes out of a negative electrode current collector coated with the negative electrode active substance layer, and the negative electrode current collector uncoated with the negative electrode active substance layer serves as a negative electrode tab. The negative electrode current collector may be made of copper, and the negative electrode active substance may be carbon, silicon, or the like. To allow a high current to pass through without any fusing, multiple positive electrode tabs are provided and stacked together, and multiple negative electrode tabs are provided and stacked together.

The electrode assembly further includes a separator, and the separator may be made of PP (polypropylene, polypropylene), PE (polyethylene, polyethylene), or the like.

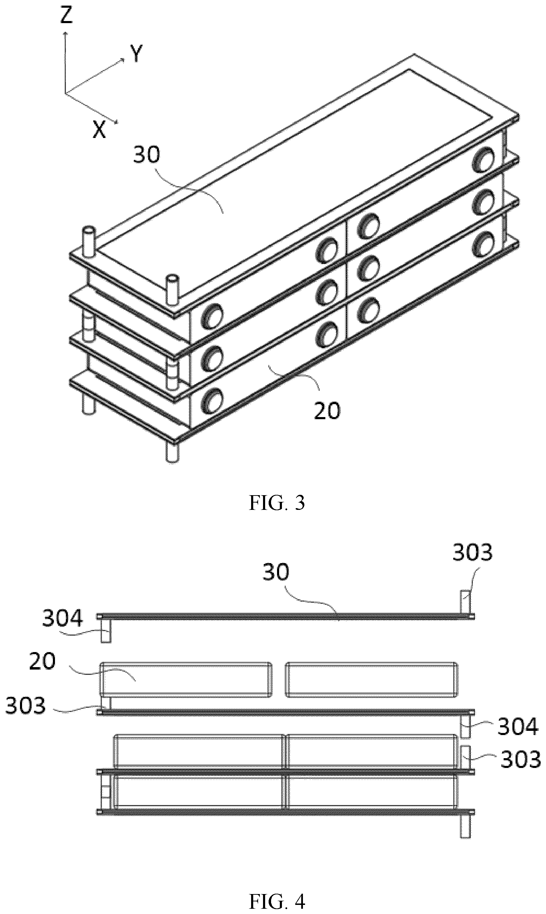

As shown in FIGs. 3 and 4, the thermal management component 30 is arranged on at least one side of the battery cell 20 and a heat exchange medium is accommodated in the thermal management component 30. The thermal management component 30 is used to regulate the temperature of the battery cell 20, ensuring that the battery remains within an appropriate temperature range and maintains high reliability.

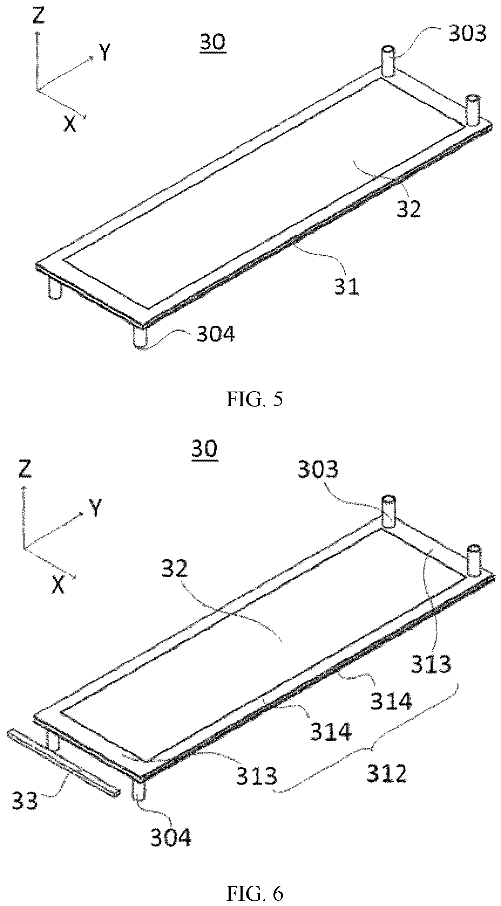

According to some embodiments of this application, referring to FIGs. 5 to 8, the thermal management component 30 includes two heat exchange surfaces 301 opposite to each other in a first direction Z; and multiple separating plates 311 are provided between the two heat exchange surfaces 301, and the multiple separating plates 311 are spaced apart, so as to form a flow channel 302. The separating plate 311 is of a bent structure, such that the separating plate 311 is retractable and deformable in the first direction Z.

Specifically, the thermal management component 30 includes two heat exchange surfaces 301 opposite to each other in the first direction Z. The heat exchange surfaces 301 are used for contacting or being close to the battery cell 20 to exchange heat with the battery cell 20. The thermal management component 30 may be generally rectangular, and the first direction Z may be the thickness direction of the thermal management component 30.

Multiple separating plates 311 are provided between the two heat exchange surfaces 301, and the multiple separating plates 311 are spaced apart, so as to form a flow channel 302, the flow channel 302 being used for the flow of the heat exchange medium. The heat exchange medium may be a fluid (liquid) or gas, and temperature regulation refers to heating or cooling the multiple battery cells 20. Optionally, the fluid may circulate, to implement a better temperature regulation effect. Optionally, the fluid may be water, mixed liquid of water and glycol, air, or the like. For example, in a case of cooling or lowering the temperature of the battery cells 20, the thermal management component 30 is configured to accommodate a cooling fluid to lower the temperature of the battery cells 20. In this case, the thermal management component 30 may also be called a cooling component, a cooling system, a cooling plate, or the like, and the fluid accommodated therein may also be called a cooling medium or cooling fluid, and more specifically, may be called cooling liquid or cooling gas. When the fluid accommodated in the thermal management component 30 is a cooling liquid, the thermal management component 30 may also be called a liquid cooling plate. The liquid cooling plate contacts the battery cell 20 and can be used to lower the temperature of the battery cell 20 to prevent thermal runaway of the battery cell 20.

The multiple separating plates 311 may be arranged in parallel or not in parallel; and the multiple separating plates 311 may be spaced equally or unequally, as long as the multiple separating plates 311 are spaced apart, so as to form the flow channel 302.

The separating plate 311 is of a bent structure and the separating plate 311 can retract and deform in the first direction Z. In this way, the height of the separating plate 311 in the first direction Z can change, so as to the thickness of the entire thermal management component 30, thus allowing the thermal management component 30 to accept a certain amount of compression and reducing the probability of structural failure.

During use, a heat exchange medium is accommodated in the flow channel 302 of the thermal management component 30, allowing the thermal management component 30 to manage the heat of the battery cell 20. When the thermal management component 30 is subjected to external compressive force, the separating plate 311 can retract and deform in the first direction Z without affecting the flow of the heat exchange medium. The external compressive force is, for example, force from an external object on the battery 100 or force from the battery cell 20 in the battery 100 on the thermal management component 30.

The thermal management component 30 provided in the above embodiment includes multiple separating plates 311. Because the separating plate 311 is of a bent structure and the separating plate 311 can retract and deform in the first direction Z, the separating plate 311 can absorb external compressive force, for example but not limited to the pressure exerted on the thermal management component 30 by the deformation of the battery cell 20, reducing the probability of structural failure of the thermal management component 30 under stress.

When the thermal management component 30 is applied to a battery, the separating plates 311 can retract and deform in the first direction Z, reducing the pressure required for assembling the battery cells 20 and the thermal management component 30 in the box. This lowers the requirements for the assembly equipment or the box structure and reduces the pressure on the battery cells 20 during assembly, preventing the battery cells 20 from being excessively compressed and thus damaged when the battery cells 20 are placed in a box. Additionally, because the separating plates 311 are retractable, the thermal management component 30 provides a swelling space for the long-term cycling of the battery cells 20 and can accommodate different degrees of swelling of the battery cells 20, providing certain protection for both the battery cells 20 and the thermal management component 30.

In some embodiments, the separating plate 311 is of a bent structure in the shape of a bent line or snake in the first direction Z.

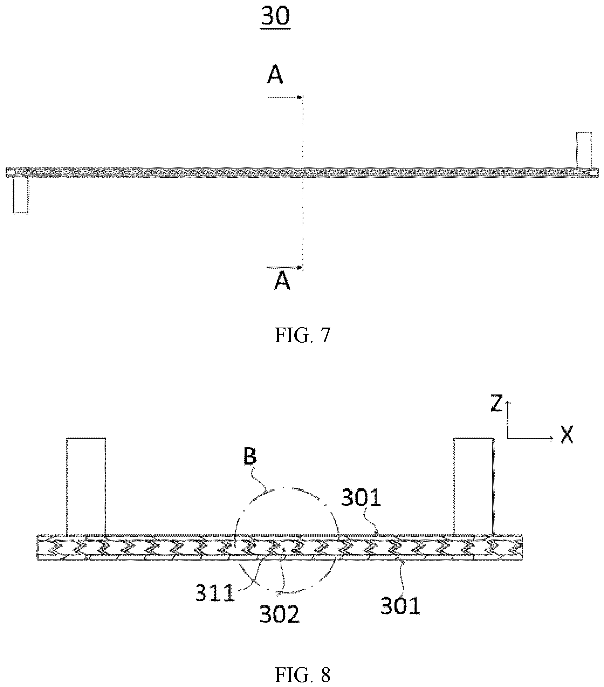

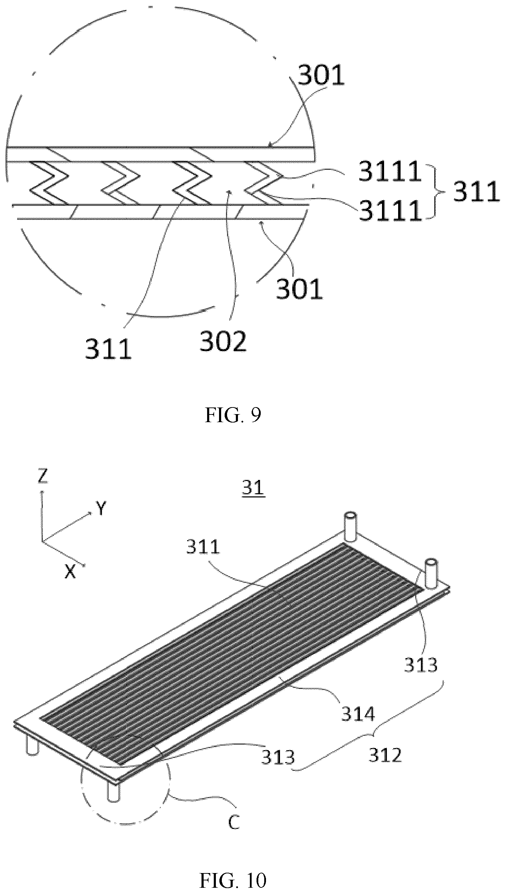

Referring to FIGs. 8 and 9, the separating plate 311 is of a bent line-shaped structure; and the separating plate 311 may also be of a snake-shaped bent structure.

Because the separating plate 311 is of a bent structure in the shape of a bent line or snake, the separating plate 311 is of a non-linear structure in the first direction Z, meaning that the separating plate 311 has one or more bent portions 3111 in the first direction Z. The separating plate 311 can deform at the bent portion 3111 to change the height of the separating plate 311 in the first direction Z.

With the use of the above technical solution, the separating plates 311 can deform elastically in the first direction Z, serving as a buffer to absorb energy.

In some embodiments, a cross section of the separating plate 311 in the first direction Z is V-shaped, Z-shaped, S-shaped, or M-shaped.

For example, in the embodiment shown in FIG. 9, the cross section of the separating plate 311 in the first direction Z is Z-shaped, and the separating plate 311 can elastically deform at the two bent portions 3111 of the Z-shape.

With the use of the above technical solution, the separating plates 311 can have various shapes to meet different compression requirements; and the separating plates 311 of the above shapes can all retract and deform along the first direction Z and are easy to manufacture.

In some embodiments, a material of the separating plate 311 is plastic or metal.

Specifically, the separating plate 311 may be made of a plastic material with good deformation capability and can be manufactured by injection molding. The separating plate 311 may also be made of a metal material, such as aluminum, copper, or steel also with good deformability.

With the use of the above technical solution, the separating plates 311 have good deformation capability and are easy to manufacture.

Referring to FIGs. 5 to 12, in some embodiments, the separating plate 311 is a long strip-shaped member, and a length direction of the separating plate 311 is a length direction or a width direction of the thermal management component 30.

The thermal management component 30 has a length direction, a width direction, and a thickness direction. In FIG. 5, the second direction Y is the length direction of the thermal management component 30, the third direction X is the width direction of the thermal management component 30, and the first direction Z is the thickness direction of the thermal management component 30.

In embodiments shown in FIGs. 5 to 12, the length direction of the separating plate 311 is the length direction (second direction Y) of the thermal management component 30, so the extension direction of the flow channel 302 is also the length direction of the thermal management component 30, such that the flow channel 302 may be set to a large length. In some other embodiments, the length direction of the separating plate 311 may also be the width direction (third direction X) of the thermal management component 30, such that the thermal management component 30 can also achieve a good thermal management effect.

With the use of the above technical solution, the extension direction of the separating plates 311 can be flexibly arranged to meet different requirements.

In other embodiments, the length direction of the separating plate 311 may also be in a direction that is inclined relative to both the length direction and the width direction of the thermal management component 30.

In some embodiments, the thermal management component 30 is provided with at least one fluid inlet 303, at least one fluid outlet 304, and at least one fluid collecting tube 313, the fluid inlet 303 and the fluid outlet 304 both communicate with the fluid collecting tube 313, an extension direction of the fluid collecting tube 313 and the length direction of the separating plate 311 form a preset included angle, and the fluid collecting tube 313 communicates with the flow channel 302. Optionally, the extension direction of the fluid collecting tube 313 is perpendicular to the length direction of the separating plates 311.

The fluid inlet 303 is used to introduce the heat exchange medium, and the fluid outlet 304 is used to discharge the heat exchange medium. There may be one or more fluid inlets 303 and fluid outlets 304, which is not limited in this application. For example, as shown in FIG. 5, the thermal management component 30 is provided with two fluid inlets 303 and two fluid outlets 304.

The fluid collecting tube 313 is used to distribute or collect the heat exchange medium, and the fluid inlet 303 and fluid outlet 304 are both provided on the fluid collecting tube 313. Thus, the heat exchange medium introduced via the fluid inlet 303 flows into the flow channel 302 through the fluid collecting tube 313 and then flows out via the fluid outlet 304 on the fluid collecting tube 313, allowing for a simple structure.

The extension direction of the fluid collecting tube 313 may be perpendicular to the length direction of the separating plate 311. As shown in FIGs. 5 and 10, in some embodiments, the separating plates 311 extend in the length direction (second direction Y) of the thermal management component 30, and the fluid collecting tube 313 extends in the width direction (third direction X) of the thermal management component 30.

With the arrangement of at least one fluid inlet 303 and fluid outlet 304, and the fluid collecting tube 313, the thermal management component 30 can deliver a heat exchange medium into the flow channel 302 and export the heat exchange medium, achieving the circulation of the heat exchange medium and thus the heat exchange effect.

In some embodiments, the fluid inlet 303, the flow channel 302, and the fluid outlet 304 communicate, enabling a heat exchange medium to flow unidirectionally in the flow channel 302.

Specifically, the fluid inlet 303, flow channel 302, and fluid outlet 304 communicate, and the heat exchange medium flows unidirectionally in the fluid inlet 303, flow channel 302, and fluid outlet 304 to exchange heat with the battery cell 20.

With the use of the above technical solution, the fluid inlet 303, the flow channel 302, and the fluid outlet 304 communicate to form a one-way flow path, preventing the heat exchange medium from flowing back into the flow channel 302 after heat exchange and affecting the thermal management effect.

Referring to FIGs. 5, 6, and 10, in some embodiments, the thermal management component 30 includes a plate support 31 and two metal plates 32, the separating plate 311 is disposed in the plate support 31, and along the first direction Z, the two metal plates 32 are fixedly connected to two opposite sides of the plate support 31, respectively.

The plate support 31 is the main structure of the thermal management component 30, and the plate support 31 may be made of a plastic material. The separating plates 311 are arranged in the plate support 31; and the separating plates 311 and the plate support 31 may be integrally formed or may be separate structures.

Along the first direction Z, the two metal plates 32 are respectively fixedly connected to two opposite sides of the plate support 31, meaning that the two metal plates 32 are opposite in the thickness direction of the thermal management component 30. The metal plates 32 have good thermal conductivity and certain structural strength. The material of the metal plates 32 may be aluminum, steel, copper, or other metal materials with good thermal conductivity.

In some embodiments, the plate support 31 is frame-shaped, and the metal plates 32 are fixed in the middle of the frame structure of the plate support 31. It is understandable that the plate support 31 may also be box-shaped, and the metal plates 32 are fixed on the surface of the plate support 31.

Because the two metal plates 32 are opposite along the first direction Z, when the separating plates 311 retract and deform in the first direction Z, the distance between the two metal plates 32 also changes accordingly, allowing for a certain amount of deformation of the entire thermal management component 30.

With the use of the above technical solution, the thermal management component 30 includes a plate support 31 and two metal plates 32, and the separating plates 311 are arranged in the plate support 31, facilitating molding. The metal plates 32 have good thermal conductivity, helping to improve thermal management efficiency.

In other embodiments, the metal plates 32 can be omitted, and the plate support 31 may be box-shaped with the surface of the plate support 31 covering the multiple separating plates 311. The plate support 31 is made of a plastic material with high thermal conductivity, which can also achieve a good thermal management effect.

Referring to FIGs. 6 and 9, in some embodiments, the heat exchange surface 301 is a surface of the metal plate 32, and two ends of the separating plate 311 along the first direction Z respectively abut against the two metal plates 32.

The metal plates 32 and the plate support 31 may be integrally formed or fixedly connected by hot melting. Because the metal plate 32 has good thermal conductivity, the heat exchange surface 301 is the surface of the metal plate 32, meaning that the surface of the metal plates 32 is fitted against or close to the battery cell 20 to exchange heat with the battery cell 20. In addition, the two ends of the separating plate 311 along the first direction Z respectively abut against the two metal plates 32. Adjacent separating plates 311 and the surface of the metal plate 32 jointly enclose the flow channel 302, and the heat exchange medium in the flow channel 302 can directly contact the metal plate 32, resulting in a better heat exchange effect and improved heat exchange efficiency.

Optionally, when the separating plate 311 is made of a plastic material, separating plate 311 abuts against the metal plate 32. When the separating plate 311 is made of a metal material, the separating plate 311 can be directly welded to the metal plate 32.

In other embodiments, the two ends of the separating plate 311 along the first direction Z may also be spaced apart from the metal plate 32. In this case, another connecting element is provided between the separating plate 311 and the metal plate 32 to relatively fix the separating plate 311 to the metal plate 32.

Still referring to FIGs. 5, 6, and 10, in some embodiments, the plate support 31 further includes an edge sealing frame 312 wrapping a periphery of the multiple separating plates 311, and the fluid inlet 303, the fluid outlet 304, and the fluid collecting tube 313 are all disposed on the edge sealing frame 312.

Specifically, the edge sealing frame 312 is made of a plastic material and is the main structure of the plate support 31. The edge sealing frame 312 is used to cover the multiple separating plates 311, allowing the plate support 31 to form an entire structure.

With the use of the above technical solution, because the multiple separating plates 311 are dispersed, so as to form the flow channel 302, the edge sealing frame 312 covers the periphery of the multiple separating plates 311, providing an edge sealing function, and preventing the heat exchange medium in the flow channel 302 from spilling out.

In some embodiments, the edge sealing frame 312 further includes two edge sealing portions 314 opposite along the first direction Z, and the edge sealing portion 314 is in the shape of a rectangular looped frame and covers two ends of each separating plate 311. One pair of opposite side edges of the edge sealing portion 314 cover two ends of each of the separating plates 311 in the length direction, and the other pair of opposite side edges of the edge sealing portion 314 are hermetically connected to corresponding side edges of the metal plate 32.

As shown in FIGs. 6 and 10, the edge sealing frame 312 includes two edge sealing portions 314, and the two edge sealing portions 314 are respectively provided on the two sides of the edge sealing frame 312 in the thickness direction.

In some embodiments, the separating plates 311 extend in the length direction (second direction Y) of the thermal management component 30, and the edge sealing portions 314 cover two opposite ends of the separating plate 311 along the length direction thereof. It is understandable that when the separating plate 311 extends in the width direction (third direction X) of the thermal management component 30, the edge sealing portions 314 also cover two opposite ends of the separating plate 311 along the length direction thereof.

As the edge sealing portion 314 is arranged in a rectangular looped frame shape, the edge sealing portion 314 only covers two opposite ends of each separating plate 311, leaving the rest of the separating plate 311 uncovered by the edge sealing portion 314. The side edge of the separating plate 311 in the height direction Z can directly abut against the metal plates 32, allowing the heat exchange medium to contact the metal plate 32.

In some embodiments, the separating plate 311, the edge sealing portion 314, and the fluid collecting tube 313 are integrally formed as one structure.

Specifically, the two edge sealing portions 314 and the two fluid collecting tubes 313 form the edge sealing frame 312, and the separating plates 311 and the edge sealing frame 312 are integrally molded through plastic injection, making the edge sealing frame 312 simple in structure, easy to mold, low in cost, and light in weight. This is conducive to accelerating the production of the thermal management component 30. The assembly of the fluid collecting tube 313 does not require a welding process and is convenient for designing different flow channels 302.

It is understandable that the separating plate 311, the edge sealing portion 314, and the fluid collecting tube 313 can be molded through one plastic injection or multiple plastic injections.

As shown in FIG. 6, in some embodiments, the thermal management component 30 further includes a sealing gasket 33, the sealing gasket 33 is fixed at an edge of the edge sealing frame 312, and the sealing gasket 33 is disposed on at least one side of the edge sealing frame 312.

The sealing gasket 33 can improve the sealing effect of the thermal management component 30. Optionally, the sealing gasket 33 and the edge sealing frame 312 may be formed integrally or arranged separately. The sealing gasket 33 may be made of a material with certain elasticity, such as polyurethane.

The sealing gasket 33 is provided on at least one side of the edge sealing frame 312. Specifically, the fluid collecting tube 313 may be strip-shaped, and the sealing gasket 33 may be provided on the same side as the fluid collecting tube 313 and the sealing gasket 33 is disposed on the outer side of the fluid collecting tube 313. The length of the sealing gasket 33 may be greater than or equal to the length of the fluid collecting tube 313. For example, as shown in FIGs. 6 to 11, the separating plates 311 extend along the second direction Y, and the flow channel 302 also extends along the second direction Y The sealing gasket 33 is provided at the tail end of the flow channel 302, further improving the sealing performance of the thermal management component 30. Optionally, the sealing gasket 33 may also be provided on the adjacent side of the fluid collecting tube 313, meaning that the sealing gasket 33 and the separating plate 311 extend in the same direction. Optionally, the sealing gasket 33 may also be provided on both the same side and the adjacent side of the fluid collecting tube 313.

In some embodiments, the metal plate 32 and the plate support 31 are integrally formed; or the metal plate 32 is welded to the plate support 31.

If the metal plate 32 and the plate support 31 are integrally formed, during manufacturing, the metal plate 32 is placed in an injection mold, and then molten plastic may be injected into the mold. After demolding, the metal plate 32 and the plate support 31 are integrally obtained. If the metal plates 32 are welded to the plate support 31, during manufacturing, the plate support 31 is pre-made, and then the two metal plates 32 are welded to the two sides of the plate support 31. It is understandable that the plate support 31 may be molded by one plastic injection or multiple plastic injections.

With the use of the above technical solution, the metal plate 32 is fixedly connected to the plate support 31, providing high structural strength.

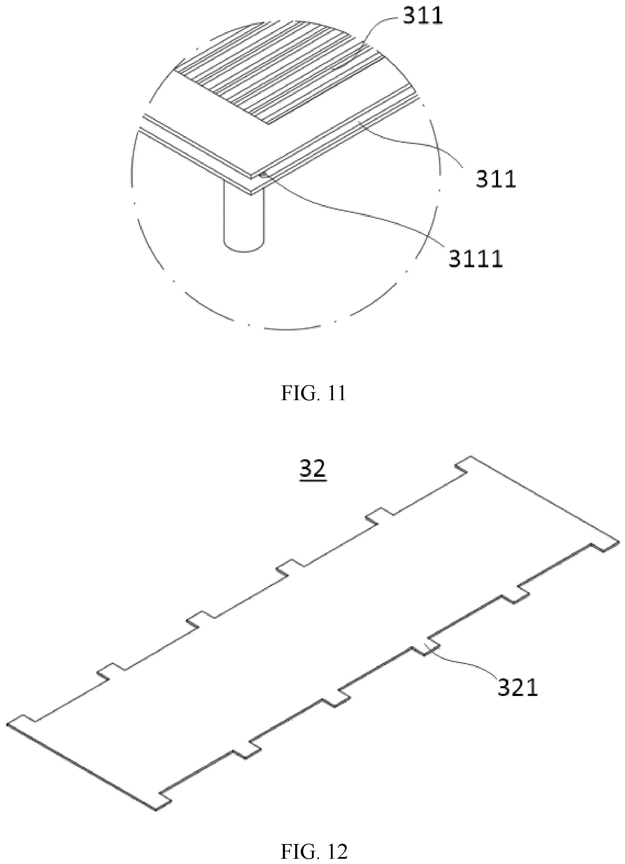

Referring to FIGs. 6 and 12, in some embodiments, an edge of the metal plate 32 is provided with a snap-fit portion 321, and the snap-fit portion 321 is embedded in the plate support 31.

The snap-fit portion 321 is provided at the edge of the metal plate 32 and the snap-fit portion 321 may be a structure such as a thin edge, a serrated edge, or the snap-fit portion 321 is provided with a protrusion or groove to enhance the connection strength. For example, as shown in FIG. 12, the snap-fit portion 321 is a protrusion provided at the edge of the metal plate 32.

With the use of the above technical solution, the snap-fit portion 321 of the metal plate 32 is embedded in the plate support 31, further enhancing the connection strength between the metal plate 32 and the plate support 31.

In some embodiments, a surface of the plate support 31 protrudes from the surface of the metal plate 32, or the surface of the plate support 31 is flush with the surface of the metal plate 32.

For example, when multiple battery cells 20 are assembled into a battery, the adjacent battery cells 20 are fixed by an adhesive, the thermal management component 30 is fixedly connected to the battery cells 20 using an adhesive, and the adhesive can be applied to the surface of the metal plates 32. If the surface of the plate support 31 protrudes from the surface of the metal plate 32, the surface of the metal plate 32 is relatively recessed relative to the plate support 31, and the plate support 31 can prevent adhesive overflow, providing a function of blocking the adhesive.

Optionally, the surface of the plate support 31 may also be flush with the surface of the metal plates 32, as long as the coating amount of the adhesive is well controlled.

With the use of the above technical solution, the metal plates 32 can exchange heat with the battery cells 20, and the thermal management component 30 can reduce the possibility of an adhesive overflowing onto an adjacent battery cell 20.

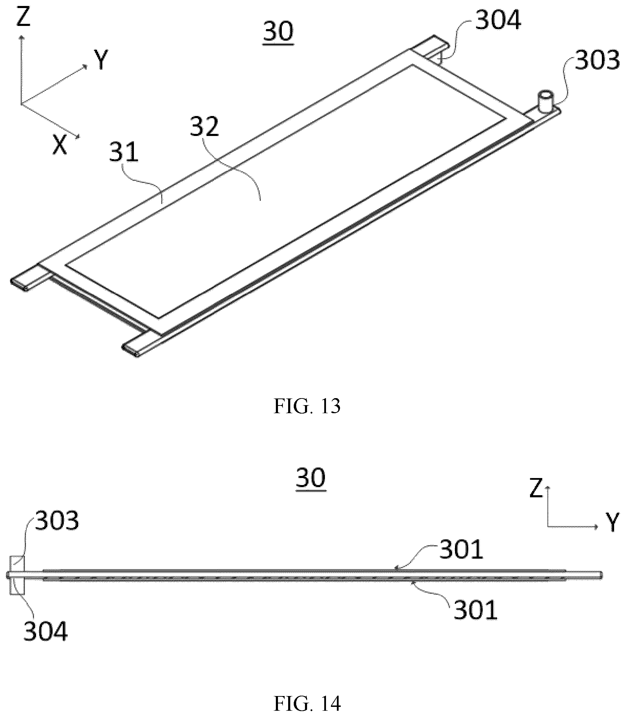

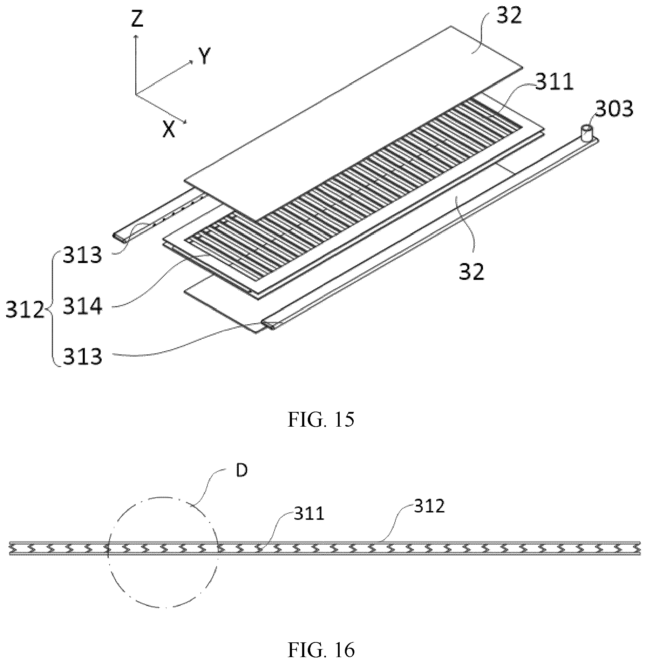

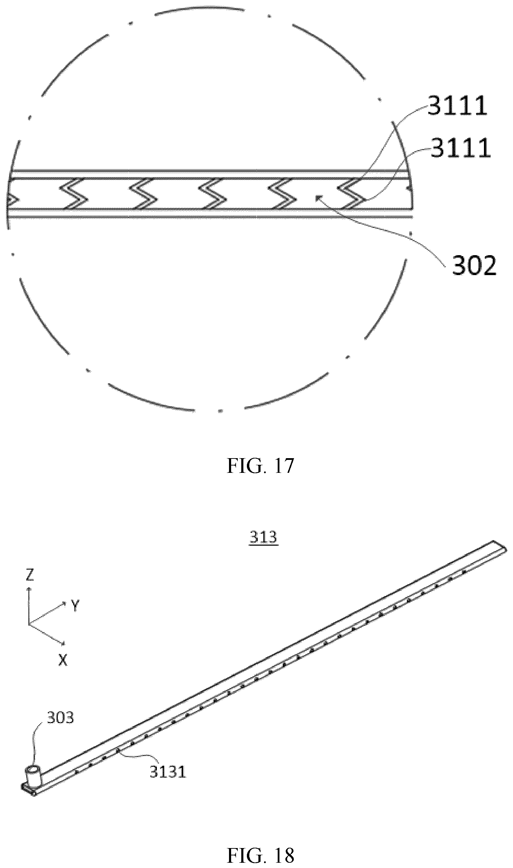

Referring to FIGs. 13 to 18, another embodiment of this application provides a thermal management component 30, similar to the embodiment shown in FIG. 5, with a flow channel 302 provided in the thermal management component 30. The thermal management component 30 includes two heat exchange surfaces 301 opposite to each other in a first direction Z; and multiple separating plates 311 are provided between the two heat exchange surfaces 301, and the multiple separating plates 311 are spaced apart, so as to form a flow channel 302. The separating plate 311 is of a bent structure, such that the separating plate 311 is retractable and deformable in the first direction Z. The difference from the embodiment shown in FIG. 5 is that the separating plates 311 extend in the width direction of the thermal management component 30, meaning that the separating plates 311 extend in the third direction X. Therefore, the flow channel 302 formed by the separating plates 311 also extends in the width direction of the thermal management component 30.

In some embodiments, the thermal management component 30 is provided with at least one fluid inlet 303 and fluid outlet 304, and a fluid collecting tube 313. The fluid inlet 303 and the fluid outlet 304 are both provided on the fluid collecting tube 313, and the extension direction of the fluid collecting tube 313 is perpendicular to the extension direction of the separating plate 311.

The thermal management component 30 includes two such fluid collecting tubes 313, the fluid collecting tube 313 is provided with at least one diverging port 3131 spaced apart along the extension direction thereof, one of the fluid collecting tubes 313 communicates with the fluid inlet 303, the other of the fluid collecting tubes 313 communicates with the fluid outlet 304, and the diverging port 3131 of each fluid collecting tube 313 corresponds to the flow channel 302, enabling the heat exchange medium to flow unidirectionally in the flow channel 302.

The fluid collecting tube 313 serves the purpose of collecting and distributing the flow. One fluid collecting tube 313 is provided with the fluid inlet 303, which can distribute the heat exchange medium flowing into the thermal management component 30 from the fluid inlet 303 to the diverging port 3131 and then to each flow channel 302. The other fluid collecting tube 313 is provided with the fluid outlet 304, which can collect the heat exchange medium from multiple flow channels 302 and guide it to the fluid outlet 304.

According to some embodiments of this application, a thermal management component 30 is provided. The thermal management component 30 includes two heat exchange surfaces 301 opposite to each other in a first direction Z; and multiple separating plates 311 are provided between the two heat exchange surfaces 301, and the multiple separating plates 311 are spaced apart, so as to form a flow channel 302. The separating plate 311 is of a bent structure, such that the separating plate 311 is retractable and deformable in the first direction Z. The thermal management component 30 further includes a plate support 31 and two metal plates 32, the separating plate 311 is disposed in the plate support 31, and along the first direction Z, the two metal plates 32 are fixedly connected to two opposite sides of the plate support 31, respectively. The plate support 31 further includes an edge sealing frame 312 covering the periphery of the multiple separating plates 311, and two opposite fluid collecting tubes 313 are provided on the edge sealing frame 312.

During use, one fluid collecting tube 313 introduces the cooling medium and enables it to flow into the flow channel 302, and then the cooling medium is discharged from the other fluid collecting tube 313, achieving heat exchange. When the thermal management component 30 is pressed, the separating plates 311 can retract and deform in the first direction Z, reducing the probability of structural failure of the thermal management component 30 due to stress.

Still referring to FIGs. 1 to 4, this embodiment of the application further provides a battery 100, including a battery cell 20 and a thermal management component 30, and the thermal management component 30 is arranged on at least one side of the battery cell 20.

The above battery 100 includes battery cells 20 and a thermal management component 30, and the thermal management component 30 can manage the thermal condition of the battery cells 20. For example, the thermal management component 30 can lower the temperature of the battery cells 20 to cool the battery cells 20 or raise the temperature of the battery cells 20 when the temperature of the battery cells 20 is too low.

Referring to FIGs. 5 to 16, because the separating plates 311 in the thermal management component 30 can retract and deform in the thickness direction of the thermal management component 30, and the thermal management component 30 can absorb a certain amount of compressive force, reserving some space for the battery cell 20 to swell, reducing the probability of structural failure of the thermal management component 30 due to stress, and improving the service life and reliability of the battery 100.

In some embodiments, the battery 100 includes multiple rows of battery cells 20 and multiple rows of thermal management components 30 arranged alternately, and two opposite surfaces of the battery cell 20 are respectively fitted against heat exchange surfaces 301 of two adjacent thermal management components 30.

Each surface of the thermal management component 30 can be fitted against one or more battery cells 20, which is not limited in this application. During assembly, one row of thermal management components 30, one row of battery cells 20, one row of thermal management components 30, one row of battery cells 20, ..., are assembled in sequence. Optionally, the thermal management component 30 is fitted against the battery cell 20 using an adhesive.

The two opposite surfaces of the battery cell 20 are respectively fitted against the heat exchange surfaces 301 of two adjacent thermal management components 30. Therefore, the heat exchange surfaces 301 of the two adjacent thermal management components 30 respectively exchange heat with two opposite surfaces of the battery cell 20. The battery 100 described above can effectively manage the heat of the battery cell 20, reducing the probability of thermal runaway of the battery cell 20.

As shown in FIGs. 3 and 4, in some embodiments, the flow channels 302 of multiple rows of thermal management components 30 communicate, where the fluid inlet 303 of one thermal management component 30 communicates with the fluid outlet 304 of another thermal management component 30 directly or via a connecting tube (not shown in the figure). The flow channels 302 of the multiple thermal management components 30 may be connected in series, parallel, or series-parallel, where being connected in series-parallel means a combination of series and parallel connections of the multiple thermal management components 30.

For example, in a series connection, the thermal management component 30 has two fluid inlets 303 at one end along its length direction and two fluid outlets 304 at the other end along its length direction. The fluid inlets 303 are provided on the upper surface of the thermal management component 30, and the fluid outlets 304 are provided on the lower surface of the thermal management component 30. One fluid inlet 303 of one thermal management component 30 communicates with the fluid outlets 304 of the previous row of thermal management components 30, and one fluid outlet 304 of the thermal management component 30 communicates with the fluid inlets 303 of the next row of thermal management components 30. It is understandable that the numbers and positions of the fluid inlets 303 and fluid outlets 304 are not limited, as long as the flow channels 302 of the multiple thermal management components 30 can communicate.

An embodiment of this application provides an electric apparatus, including the battery 100 in any one of the foregoing embodiments, where the battery 100 is configured to supply electrical energy.

The electric apparatus may be any device or system that uses the battery 100.

It should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. These modifications or replacements, which do not cause the essence of the corresponding technical solutions to depart from the spirit and scope of technical solutions of the embodiments of this application, should be included within the protection scope of this application.

## Claims

1. A thermal management component, **characterized in that**:
the thermal management component comprises two heat exchange surfaces opposite to each other in a first direction; and
multiple separating plates are provided between the two heat exchange surfaces, and the multiple separating plates are spaced apart, so as to form a flow channel;
wherein the separating plate is of a bent structure, such that the separating plate is retractable and deformable in the first direction.

2. The thermal management component according to claim 1, **characterized in that** the separating plate is of a bent structure in the shape of a bent line or snake in the first direction.

3. The thermal management component according to claim 2, **characterized in that** a cross section of the separating plate in the first direction is V-shaped, Z-shaped, S-shaped, or M-shaped.

4. The thermal management component according to any one of claims 1 to 3, **characterized in that** a material of the separating plate is plastic or metal.

5. The thermal management component according to any one of claims 1 to 3, **characterized in that** the separating plate is a long strip-shaped member, and a length direction of the separating plate is a length direction or a width direction of the thermal management component.

6. The thermal management component according to any one of claims 1 to 5, **characterized in that** the thermal management component is provided with at least one fluid inlet, at least one fluid outlet, and at least one fluid collecting tube, the fluid inlet and the fluid outlet both communicate with the fluid collecting tube, and an extension direction of the fluid collecting tube and the length direction of the separating plate form a preset included angle.

7. The thermal management component according to claim 6, **characterized in that** the fluid inlet, the flow channel, and the fluid outlet communicate, enabling a heat exchange medium to flow unidirectionally in the flow channel.

8. The thermal management component according to claim 7, **characterized in that** the thermal management component comprises two such fluid collecting tubes, the fluid collecting tube is provided with at least one diverging port spaced apart along the extension direction thereof, one of the fluid collecting tubes communicates with the fluid inlet, the other of the fluid collecting tubes communicates with the fluid outlet, and the diverging port of each fluid collecting tube corresponds to the flow channel, enabling the heat exchange medium to flow unidirectionally in the flow channel.

9. The thermal management component according to claim 6, **characterized in that** the thermal management component comprises a plate support and two metal plates, the separating plate is disposed in the plate support, and along the first direction, the two metal plates are fixedly connected to two opposite sides of the plate support, respectively.

10. The thermal management component according to claim 9, **characterized in that** the heat exchange surface is a surface of the metal plate, and two ends of the separating plate along the first direction respectively abut against the two metal plates.

11. The thermal management component according to claim 9, **characterized in that** the plate support further comprises an edge sealing frame wrapping a periphery of the multiple separating plates, and the fluid inlet, the fluid outlet, and the fluid collecting tube are all disposed on the edge sealing frame.

12. The thermal management component according to claim 11, **characterized in that** the edge sealing frame comprises two edge sealing portions opposite along the first direction, the edge sealing portion is in the shape of a rectangular looped frame, one pair of opposite side edges of the edge sealing portion cover two ends of each of the separating plates in the length direction, and the other pair of opposite side edges of the edge sealing portion are hermetically connected to corresponding side edges of the metal plate.

13. The thermal management component according to claim 12, **characterized in that** the separating plate, the edge sealing portion, and the fluid collecting tube are integrally formed as one structure.

14. The thermal management component according to claim 11, **characterized in that** the thermal management component further comprises a sealing gasket, the sealing gasket is fixed at an edge of the edge sealing frame, and the sealing gasket is disposed on at least one side of the edge sealing frame.

15. The thermal management component according to any one of claims 9 to 12, **characterized in that** the metal plate and the plate support are integrally formed; or the metal plate is welded to the plate support.

16. The thermal management component according to any one of claims 9 to 12, **characterized in that** an edge of the metal plate is provided with a snap-fit portion, and the snap-fit portion is embedded in the plate support.

17. The thermal management component according to any one of claims 9 to 12, **characterized in that** a surface of the plate support protrudes from the surface of the metal plate, or the surface of the plate support is flush with the surface of the metal plate.

18. A battery, **characterized by** comprising:
a battery cell; and
the thermal management component according to any one of claims 1 to 17, wherein the thermal management component is disposed on at least one side of the battery cell.

19. The battery according to claim 18, **characterized in that** the battery comprises multiple rows of such battery cells and multiple rows of such thermal management components arranged alternately, and two opposite surfaces of the battery cell are respectively fitted against the heat exchange surfaces of adjacent two of the thermal management components.

20. An electric apparatus, **characterized by** comprising the battery according to claim 18 or 19.
